# EUROPÄISCHE PATENTSCHRIFT

(11) **EP 1 705 499 B1**
(45) Veröffentlichungstag und Bekanntmachung des Hinweises auf die Patenterteilung: **02.01.2019**
(21) Anmeldenummer: 05006516.8
(22) Anmeldetag: 24.03.2005
(51) Int. Cl.: G01S 13/75

(54) **Vorrichtung zur Datenträger-Detektion**
Device for detecting a data carrier
Dispositif de détection d'un support de données

(43) Veröffentlichungstag der Anmeldung: 27.09.2006
(73) Patentinhaber: SKIDATA AG, 5083 Grödig/Salzburg (AT)
(72) Erfinder: Lechner, Walter, A-5071 Wals (AT)
(74) Vertreter: Karakatsanis, Georgios

(56) Entgegenhaltungen:
- EP-A- 1 065 625
- EP-B1- 0 770 249
- DE-A1- 3 242 551
- DE-A1- 3 714 263
- DE-A1- 3 723 332
- JP-A- H08 339 458
- US-A- 4 459 474
- US-A- 5 661 286
- US-A1- 2002 034 978

## Beschreibung

Die Erfindung bezieht sich auf eine Vorrichtung zur Zugangskontrolle nach dem Oberbegriff des Anspruchs 1.

Bei einer derartigen Vorrichtung kontrolliert eine automatische Leseeinheit den Datenträger der passierenden Person, wobei der Zugang, der meist mittels einer Drehsperre gesperrt ist, bei Lesen einer gültigen Zugangsberechtigung freigegeben wird.

Als Datenträger werden meistens sogenannte RFID-Transponder verwendet, die z.B. näher beschrieben sind in: Klaus Finkenzeller "RFID-Handbuch" 1998 Carl Hanser Verlag München-Wien. Der RFID-Transponder kann beispielsweise in eine Karte oder in eine Armbanduhr oder dergleichen von einer Person getragenen Gegenstand integriert sein. Die Energieversorgung des Datenträgers sowie der Datenaustausch erfolgt durch elektromagnetische Felder. Ein RFID-Transponder besteht aus einem Mikrochip und einem Koppelelement, beispielsweise einer Spule oder einer Antenne, über welches die zum Betrieb des Transponders benötigte Energie empfangen wird, die von der Leseeinheit gesendet wird. RFID-Transponder arbeiten häufig mit einer Trägerfrequenz von 125 kHz oder 13,56 MHz. Die im Transponder gespeicherten Daten werden mit einer Antenne in Form einer Leiterschleife ausgelesen, die mit der Leseeinheit verbunden ist.

Bei Freizeiteinrichtungen, wie Skiliften oder Seilbahnen, oder beim Zugang zu Großveranstaltungen, beispielsweise Sportstadien, aber auch bei Messen oder anderen Einrichtungen mit entsprechend großem Personenansturm sind meist eine Vielzahl von Zugangsspuren nebeneinander vorgesehen, die jeweils mit einer Antenne, einer Leseeinheit und einem Sperr- und/oder Erkennungsmittel versehen sind.

Durch den relativ geringen Abstand der Antennen kommt es zu einer gegenseitigen störenden Beeinflussung, durch die eine Fehlfunktion eintreten kann, die z.B. darin besteht, dass eine Zugangsspur geöffnet wird, ohne dass eine Berechtigungskarte für dieselbe vorhanden wäre.

Um diese gegenseitige Beeinflussung zu beseitigen, ist aus EP 0770249B1 eine Vorrichtung nach dem Oberbegriff des Anspruchs 1 bekannt. Dabei ist zwischen den beiden als Leiterschleife ausgebildeten und jeweils an eine Leseeinrichtung angeschlossenen Antennen zwischen zwei Zugangsspuren eine metallische Abschirmung vorgesehen. Durch die in der metallischen Abschirmung erzeugten Wirbelströme wird jedoch die Lesereichweite erheblich reduziert. Zur Herabsetzung dieser Wirbelströme ist es, abgesehen von einem großen Abstand der beiden Leiterschleifen von der Abschirmung, bekannt, zwischen der Abschirmung und der Antenne ein Ferritmaterial anzuordnen. Dies ist jedoch mit einem erheblichen Aufwand verbunden und beseitigt die Reduktion der Lesereichweite auch nur zum Teil.

Aus US 5,661,286 A ist eine Zugangskontrollvorrichtung bekannt. Jeder der beiden Zugangsspuren ist eine Antenne zugeordnet. Damit sich die Antennen, die den Datenträger auf der einen beziehungsweise auf der anderen Spur auslesen, nicht beeinflussen, ist zwischen den Zugangsspuren eine tote Zone vorgesehen.

Aus DE 37 14 263 A1 geht eine Anordnung zur Standortbestimmung eines Datenträgers mit einer Leseeinheit zum Auslesen von auf dem Datenträger abgelegten Daten mittels radiofrequenter Signale mit zwei Ferritstabantennen hervor, die an eine Leseeinheit angeschlossen sind, wobei die Leseeinheit eine Schaltung zur Bestimmung der Modulationstiefe der von den Antennen von dem Datenträger empfangenen Signale aufweist.

Aufgabe der Erfindung ist es daher, mit geringem Aufwand eine zuverlässige Detektion der Lage eines Datenträgers auf der jeweiligen Zugangsspur einer Zugangskontrollvorrichtung zu ermöglichen.

Dies wird erfindungsgemäß mit der im Anspruch 1 gekennzeichneten Vorrichtung erreicht. In den Unteransprüchen sind vorteilhafte Ausgestaltungen der Erfindung wiedergegeben.

Nach der Erfindung ist die Leseeinheit mit einer Schaltung versehen, mit der die Modulationstiefe der empfangenen Signale bestimmt wird, die von den beiden Teilantennen empfangen werden. Bei der Zugangskontrollvorrichtung mit mehreren Zugangsspuren sind die beiden Teilantennen jeweils zwischen zwei Zugangsspuren angeordnet. Mit den beiden Teilantennen, die der einen bzw. anderen Zugangsspur zugeordnet sind, kann dann festgestellt werden, ob sich der Datenträger auf der einen oder der anderen Zugangsspur befindet.

D.h., der beispielsweise als RFID-Transponder ausgebildete Datenträger wird mit einer Trägerfrequenz von z.B. 125 kHz oder 13,56 MHz angeregt und die aus dem Speicher des Datenträgers ausgelesenen Signale werden auf die Trägerfrequenz aufmoduliert. Der Grad oder die Tiefe der Modulation, die der RFID-Datenträger erzeugt, nimmt mit zunehmender Entfernung zwischen den Teilantennen und dem Datenträger ab. D.h., an der Teilantenne, die den kürzeren Abstand von dem Datenträger aufweist, ist die Modulationstiefe größer als an der daneben angeordneten, der anderen Zugangsspur zugeordneten Teilantenne.

Durch Vergleich der Modulationstiefen der von den beiden Antennen empfangenen Signale kann damit bestimmt werden, auf welcher Zugangsspur sich der Datenträger befindet. Bei Lesung einer gültigen Zugangsberechtigung mit der Leseeinheit wird von der Leseeinheit dann das Sperr- und/oder Erkennungsmittel der betreffenden Zugangsspur angesteuert, um den Zugang freizugeben. Das Sperrmittel kann beispielsweise eine Drehsperre und das Erkennungsmittel beispielsweise eine Ampel oder dergleichen optische Anzeige sein. Als Drehsperre kann insbesondere ein Drehstern mit geneigter Drehachse verwendet werden.

Zum Vergleich der Modulationstiefen können die von den beiden Teilantennen empfangenen Signale über je ein Eingangsfilter mit Verstärker dem Mikroprozessor der Leseeinheit zugeführt werden.

Im einfachsten Fall kann eine herkömmliche Leseeinheit mit Sende-/Empfangselektronik und einer Sende-/Empfangsantenne verwendet werden, um die Berechtigungsdaten aus dem Datenträger auszulesen. Neben der Sende-/Empfangsantenne der Leseeinheit kann eine zweite Antenne angeordnet werden, die als reine Empfangsantenne oder Horchantenne ebenfalls die Ausgangssignale des Datenträgers empfängt. Durch Vergleich der Modulationstiefe der Signale, die mit den beiden Antennen empfangen werden, wird dann die Lage des Datenträgers auf der einen bzw. anderen Zugangsspur bestimmt. Statt einer Empfangs- oder Horchantenne neben der Sende-/Empfangsantenne können auch zwei Horchantennen beiderseits der Sende-/Empfangsantenne vorgesehen sein, wobei die Modulationstiefe der von den beiden Horchantennen empfangenen Signale miteinander verglichen wird.

Vorzugsweise wird jedoch eine Leseeinheit mit zwei nebeneinander angeordneten Sende-/Empfangsteilantennen verwendet. Die Sende-/Empfangsantenne und die Empfangs- oder Horchantenne bzw. die beiden Horchantennen bzw. die beiden Sende-/Empfangsteilantennen können im Zeitmultiplexbetrieb abwechselnd aktiviert werden, um Störungen durch magnetische Verkopplung zu verhindern. Durch den Multiplexbetrieb wird jedoch die Erkennung der Lage der Datenträger verlangsamt. Auch lässt bei vorgegebener Sendeleistung die Lesereichweite zu wünschen übrig.

Vorzugsweise werden daher erfindungsgemäß die beiden Sende/Empfangsteilantennen der Leseeinheit so betrieben, dass die Leseeinheit gegenphasige Ausgangssignale aussendet, wobei die beiden Teilantennen gegensinnig orientiert sind, oder dass sie gleichphasige Ausgangssignale bei gleichsinnig orientierten Teilantennen aussendet.

Die Teilantennen werden durch eine Leiterschleife gebildet. Die gegensinnig orientierten Teilantennen sind so gestaltet, dass zu einem bestimmten Zeitpunkt der Strom in der einen Leiterschleife in der einen Richtung und in der anderen Leiterschleife in der entgegengesetzten Richtung fließt. Bei gleichsinnig orientierten Teilantennen fließt der Strom in beiden Teilantennen in die gleiche Richtung.

Um mit der Leseeinheit gegenphasige Ausgangssignale zu erzeugen, kann einer der beiden Antennentreiber als invertierter Antennentreiber ausgebildet sein.

Da die Leseeinheit bei gegensinniger Orientierung der beiden Teilantennen gegenphasige Ausgangssignale oder bei gleichsinniger Orientierung der beiden Teilantennen gleichphasige Ausgangssignale aussendet, kommt es praktisch zu einer Addition der durch die beiden Teilantennen generierten Felder. Damit wird die Lesereichweite wesentlich erhöht.

Um die maximale Addition der durch die beiden Teilantennen generierten Felder zu erreichen, sollte der Abstand der Teilantennen so gering wie möglich sein. Andererseits ist der Unterschied in der Modulationstiefe umso größer je größer der Abstand zwischen den beiden Teilantennen ist. Der Abstand ist daher zumindest 1 mm und nicht größer als der halbe Durchmesser der Leiterschleifen. Vorzugsweise beträgt der Abstand zwischen den Teilantennen 3 mm bis 3 cm.

Damit der Unterschied der Modulationstiefe des von beiden Teilantennen empfangenen Signals zuverlässig erfasst wird, sind die beiden Teilantennen möglichst identisch ausgebildet. Auch verlaufen die Leiterschleifen möglichst parallel zueinander. Desgleichen sollten die Antennentreiber und die Eingangsfilter mit Verstärker möglichst dieselbe Charakteristik besitzen.

Für die erfindungsgemäße Vorrichtung können dabei sehr einfach aufgebaute, kostengünstige Leiterschleifen als Teilantennen verwendet werden. So kann die Leiterschleife auf eine Folie aufgedruckt sein. Ferner können die Teilantennen als Printantennen ausgebildet sein oder als Drahtschleifenantennen. Ferner ist es möglich, die Teilantennen als Koaxialkabel-Antennen auszubilden.

Um eine nicht perfekte Symmetrie der beiden Antennentreiberstufen, der beiden Teilantennen, der beiden Eingangsfilter mit Verstärker und/oder diverse andere Einflüsse, wie Temperatur, Luftfeuchtigkeit, Bauteiltoleranzen und Bauteilalterung zu kompensieren, ist es vorteilhaft, die beiden Teilantennen mit den beiden Antennentreibern abwechselnd anzusteuern.

Durch Umschalten der ersten Treiberstufe von der ersten Teilantenne zu der zweiten Teilantenne und Umschalten der zweiten Treiberstufe von der zweiten Teilantenne zu der ersten Teilantenne kann der Unterschied der Modulationstiefe in beiden Schalterstellungen gemessen werden, wodurch Abweichungen in der Hardware und sonstige Einflüsse kompensiert werden können.

Als Datenträger werden erfindungsgemäß vorzugsweise übliche antikollisionsfähige RFID-Datenträger verwendet, also Datenträger, die nicht gleichzeitig, sondern nacheinander gelesen werden können. Damit ist sichergestellt, dass kein Konflikt auftritt, wenn sich zwei Datenträger im Bereich der, der jeweiligen Zugangsspur zugeordneten Teilantenne befinden.

Nachstehend ist die Erfindung anhand der beigefügten Zeichnung beispielhaft näher erläutert. Darin zeigen jeweils schematisch:
- Figur 1: eine Draufsicht auf einen Zugang mit zwei Zugangsspuren, wobei die Teilantennen im Schnitt dargestellt sind;
- Figur 2: eine Schaltungsanordnung für die Zugangskontrollvorrichtung;
- Figur 3: ein Diagramm der Trägerfrequenz mit aufmodulierten Signalen;
- Figur 4: eine Seitenansicht auf die beiden Teilantennen nach Figur 1; and
- Figur 5: eine Variante der Schaltungsanordnung nach Figur 2.

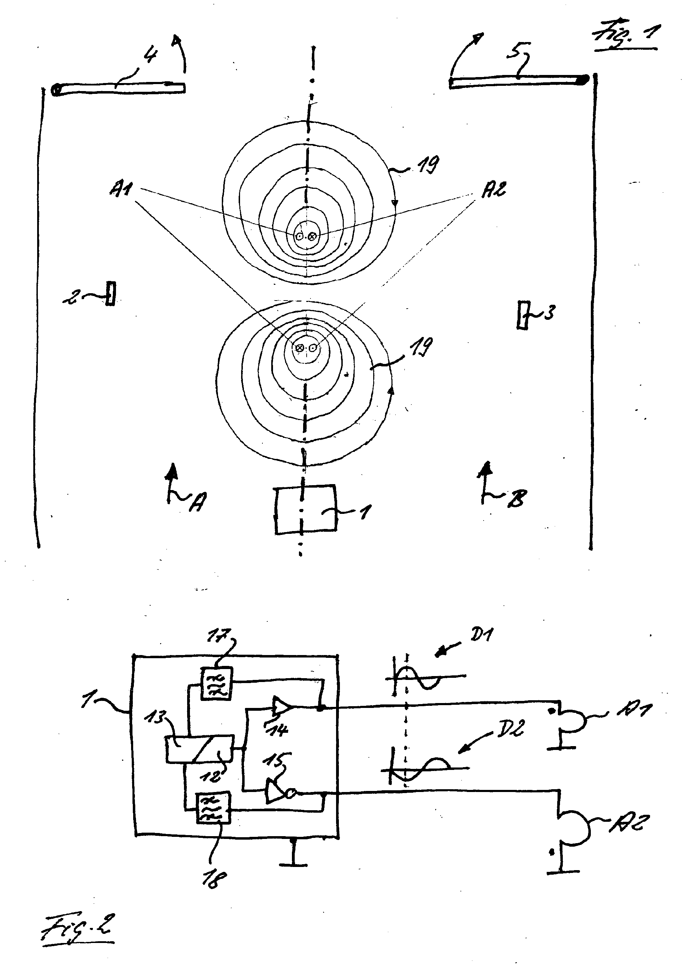

Gemäß Figur 1 weist ein Zugang zwei Zugangsspuren A und B auf. Zwischen den beiden Zugangsspuren A und B sind zwei Teilantennen A1 und A2 nebeneinander angeordnet, welche durch je eine Leiterschleife gebildet werden, die in Figur 1 geschnitten dargestellt sind.

Die Teilantenne A1 ist dabei der Zugangsspur A und die Teilantenne A2 der Zugangsspur B zugewandt. Die Teilantennen A1, A2 sind an eine Leseeinheit 1 angeschlossen.

Bei gültiger Lesung eines als RFID-Transponder ausgebildeten Datenträgers 2 auf der Zugangsspur A oder bei gültiger Lesung eines Datenträgers 3 in Form eines RFID-Transponders auf der Zugangsspur B wird die Drehsperre 4 bzw. 5 angesteuert, um den Zugang A bzw. B freizugeben.

Die Teilantennen A1, A2 sind als Sende-/Empfangsteilantennen ausgebildet. Mit dem radiofrequenten Feld der Teilantennen A1, A2 wird der RFID-Transponder 2 bzw. 3 auf der Zugangsspur A bzw. B mit einer bestimmten Trägerfrequenz von z.B. 13,56 MHz angeregt, wobei die aus dem Speicher des RFID-Transponders 2 bzw. 3 ausgelesenen Signale auf die Trägerfrequenz aufmoduliert und von den Teilantennen A1, A2 empfangen werden.

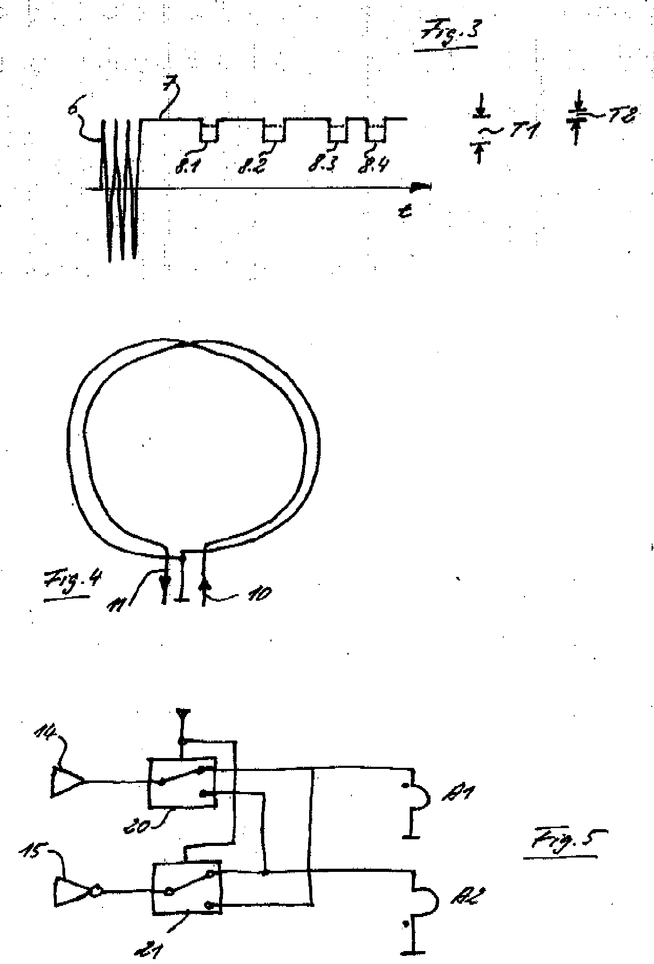

In Figur 3 ist die Trägerfrequenz links mit einigen Schwingungen 6 und ansonsten als Umhüllende 7 dargestellt, desgleichen die z.B. durch Bedämpfen erzeugten, auf die Trägerfrequenz aufmodulierten Signale 8.1, 8.2 usw., die von dem Transponder 2 von der Teilantenne A1 empfangen werden.

Die Modulationstiefe der mit der Teilantenne A1 von dem Transponder 2 empfangenen Signale ist in Figur 3 als T1 bezeichnet. Ferner sind in Figur 3 die auf die Trägerfrequenz aufmodulierten Signale des Transponders 2, die von der Teilantenne 2 empfangen werden, gestrichelt dargestellt, wobei sie eine geringere Modulationstiefe T2 besitzen. Aufgrund der größeren Modulationstiefe T1 bei Empfang durch die der Zugangsspur A zugeordnete Teilantenne A1 gegenüber der Modulationstiefe T2 bei Empfang durch die Teilantenne A2 wird damit ein auf der Zugangsspur A ausgelesener Datenträger 2 detektiert. Falls die ausgelesenen Signale einer Zugangsberechtigung entsprechen, wird damit die Drehsperre 4 geöffnet. Wenn andererseits die von der Teilantenne A2 empfangenen Signale eine größere Modulationstiefe aufweisen als die der Teilantenne A1, wird ein Datenträger 3 auf der Zugangsspur detektiert und damit bei gültiger Zugangsberechtigung die Drehsperre 5 geöffnet.

Gemäß Figur 1 und 4 sind die beiden Teilantennen A1 und A2 gegensinnig orientiert. Dazu ist in Figur 1 durch das Symbol ⊙ ein von der Zeichenebene nach oben verlaufender Strom und durch das Symbol ⊗ ein von der Zeichenebene nach unten verlaufender Strom dargestellt, wobei diese Darstellung wegen des Wechselfeldes freilich nur bei Betrachtung eines bestimmten Zeitpunktes gilt. In Figur 4 ist die gegensinnige Stromflussrichtung durch die Pfeile 10, 11 dargestellt. Auch ist aus Figur 4 ersichtlich, dass die beiden Leiterschleifen A1, A2, die die Antenne bilden, ansonsten identisch ausgebildet sind.

Gemäß Figur 2 weist die Leseeinheit 1 eine Sende-/Empfangselektronik 12, 13 auf. An die Sendeelektronik 12 sind die beiden Treiberstufen 14, 15 für die Teilantennen A1 und A2 angeschlossen. Die Treiberstufe 15 für die Teilantenne A2 ist dabei als invertierte Treiberstufe ausgebildet, d.h., im Vergleich zu dem in dem Diagramm D1 in Figur 2 dargestellten Phasenverlauf weist das Ausgangssignal des invertierten Treibers 15 gemäß dem Diagramm D2 einen gegenphasigen Verlauf auf.

Nach der sogenannten Rechtsschraubenregel addieren sich damit die von den beiden Teilantennen A1, A2 generierten magnetischen Felder, wie in Figur 1 durch die Feldlinien 19 dargestellt ist.

Um die unterschiedliche Modulationstiefe T1, T2 der durch die beiden Teilantennen A1, A2 empfangenen Signale zu bestimmen, sind die Teilantennen A1, A2 jeweils über ein Eingangsfilter 17, 18 mit Verstärker an die Empfangselektronik 13 angeschlossen, wobei die Signale von den beiden Teilantennen A1, A2 von den Eingangsfiltern 17, 18 mit Verstärker dem nicht dargestellten Mikroprozessor der Sende-/Empfangselektronik 12, 13 zugeführt werden.

Um eine nicht perfekte Symmetrie der beiden Treiberstufen 14, 15, der beiden Teilantennen A1, A2, der beiden Eingangsfilter 17, 18 und diverse andere variable Einflüsse zu kompensieren, können die beiden Teilantennen A1, A2 gemäß Figur 5 durch Schalter 20, 21 abwechselnd von den beiden Antennentreibern 14, 15 angesteuert werden.

## Patentansprüche

1. Vorrichtung zur Zugangskontrolle mit Zugangsberechtigungen, die auf berührungslos wirkenden, mittels radiofrequenter Felder überprüfbaren Datenträgern (2, 3) gespeichert sind, mit mindestens zwei Zugangsspuren (A, B) und mit Sperr- und/oder Erkennungsmitteln (4, 5) und einer Leseeinheit (1) zum Auslesen der Datenträger (2, 3), wobei die Sperr- und Erkennungsmittel (4, 5) bei einer auf dem Datenträger (2, 3) gespeicherten und von der Leseeinheit (1) ausgelesenen Zugangsberechtigung an der jeweiligen Zugangsspur (A, B) den Zugang freigeben, wobei zwischen zwei Zugangsspuren (A, B) zwei auf der einen bzw. anderen Zugangsspur (A, B) zugeordnete, an die Leseeinheit (1) angeschlossene, durch Leiterschleifen gebildete Teilantennen (A1, A2) nebeneinander angeordnet sind, welche die Datenträger (2, 3) mittels der radiofrequenten Felder überprüfen, **dadurch gekennzeichnet, dass** der Abstand zwischen den beiden Teilantennen (A1, A2) mindestens 1 mm beträgt und nicht größer als der halbe Durchmesser der Leiterschleifen ist, zur Detektion der Lage des Datenträgers (2, 3) auf der einen oder anderen Zugangsspur (A, B) die Leseeinheit (1) eine Schaltung zur Bestimmung der Modulationstiefe (T1, T2) der mit den beiden Teilantennen (A1, A2) empfangenen Signale aufweist und zur Erhöhung der Lesereichweite mit der Leseeinheit (1) bei gegensinniger Orientierung der beiden Teilantennen (A1, A2) gegenphasige Ausgangssignale oder bei gleichsinniger Orientierung der beiden Teilantennen (A1, A2) gleichphasige Ausgangssignale aussendbar sind.

2. Vorrichtung nach Anspruch 1, **dadurch gekennzeichnet, dass** die Leseeinheit (1) einen Mikroprozessor zur Bestimmung der unterschiedlichen Modulationstiefe (T1, T2) der mit den beiden Teilantennen (A1, A2) empfangenen Signale aufweist.

3. Vorrichtung nach Anspruch 1 oder 2, **dadurch gekennzeichnet, dass** die von den beiden Teilantennen (A1, A2) empfangenen Signale über je ein Eingangsfilter (17, 18) mit Verstärker dem Mikroprozessor der Leseeinheit (1) zuführbar sind.

4. Vorrichtung nach einem der vorstehenden Ansprüche, **dadurch gekennzeichnet, dass** die Leseeinheit (1) eine Sende-/Empfangselektronik (12, 13) aufweist.

5. Vorrichtung nach Anspruch 1, **dadurch gekennzeichnet, dass** die beiden Teilantennen (A1, A2) im Zeitmultiplexbetrieb abwechselnd aktivierbar sind.

6. Vorrichtung nach einem der vorstehenden Ansprüche, **dadurch gekennzeichnet, dass** die Datenträger (2, 3) als antikollisionsfähige Datenträger ausgebildet sind.

7. Vorrichtung nach Anspruch 1, **dadurch gekennzeichnet, dass** die Leseeinheit (1) für jede Teilantenne (A1, A2) einen Antennentreiber (14, 15) aufweist und einer der beiden Antennentreiber (14, 15) zur Erzeugung gegenphasiger Ausgangssignale als invertierter Antennentreiber (15) ausgebildet ist.

8. Vorrichtung nach Anspruch 7, **dadurch gekennzeichnet, dass** die Leseeinheit (1) eine Schaltung aufweist, mit der die beiden Teilantennen (A1, A2) abwechselnd von den beiden Antennentreibern (14, 15) ansteuerbar sind.

## Claims

1. A device for access control with access authorizations which are saved on data carriers (2, 3) which act in a contactless manner and can be checked by means of radio-frequency fields, having at least two access lanes (A, B) and having blocking and/or recognition means (4, 5) and a reading unit (1) for reading the data carriers (2, 3), the blocking and recognition means (4, 5) authorizing access at the respective access lane (A, B) when an access authorization saved on the data carrier (2, 3) is read by the reading unit (1), two part antennae (A1, A2) being arranged next to one another between two access lanes (A, B), which antennae are assigned to one or the other access lane (A, B), are connected to the reading unit (1), are formed by conductor loops and check the data carriers (2, 3) by means of the radio-frequency fields, **characterized in that** the spacing between the two part antennae (A1, A2) is at least 1 mm and is not larger than half of the diameter of the conductor loops, for detecting the position of the data carrier (2, 3) on one or the other access lane (A, B), the reading unit (1) has a circuit for determining the modulation depth (T1, T2) of the signals received using the two part antennae (A1, A2), and, for increasing the reading range using the reading unit (1), anti-phase output signals can be sent if the two part antennae (A1, A2) are orientated in the opposite direction or in-phase output signals can be sent if the two part antennae (A1, A2) are orientated in the same direction.

2. The device according to Claim 1, **characterized in that** the reading unit (1) has a microprocessor for determining the different modulation depths (T1, T2) of the signals received using the two part antennae (A1, A2).

3. The device according to Claim 1 or 2, **characterized in that** the signals received by the two part antennae (A1, A2) can be supplied to the microprocessor of the reading unit (1) via one input filter (17, 18) with amplifier in each case.

4. The device according to one of the preceding claims, **characterized in that** the reading unit (1) has transceiving electronics (12, 13).

5. The device according to Claim 1, **characterized in that** the two part antennae (A1, A2) can be activated alternately in time-division multiplexing operation.

6. The device according to one of the preceding claims, **characterized in that** the data carriers (2, 3) are constructed as anti-collision capable data carriers.

7. The device according to Claim 1, **characterized in that** the reading unit (1) has an antenna driver (14, 15) for each part antenna (A1, A2) and one of the two antenna drivers (14, 15) is formed as an inverted antenna driver (15) for generating anti-phase output signals.

8. The device according to Claim 7, **characterized in that** the reading unit (1) has a circuit, using which the two part antennae (A1, A2) can be controlled alternately by the two antenna drivers (14, 15).

## Revendications

1. Dispositif pour le contrôle d'accès avec autorisations d'accès qui sont mémorisées sur des supports de données (2,3) agissant sans contact, vérifiables au moyen de champs de radiofréquence, avec au moins deux pistes d'accès (A,B) et avec des moyens de blocage et/ou d'identification (4,5) et une unité de lecture (1) pour lire les supports de données (2,3), les moyens de blocage et d'identification (4,5) libérant l'accès sur la piste d'accès respective (A,B) pour une autorisation d'accès mémorisée sur le support de données (2,3) et lue par l'unité de lecture (1), deux parties d'antenne (A1, A2) attribuées à l'une ou l'autre piste d'accès (A,B), raccordées à l'unité de lecture (1) formées par des boucles de conducteurs étant disposés l'une à côté de l'autre entre deux pistes d'accès (A,B), lesquelles vérifient les supports de données (2,3) au moyen des champs de radiofréquence, **caractérisé en ce que** la distance entre les deux parties d'antenne (A1, A2) est au moins d'1 mm et pas plus grand que le demi diamètre des boucles de conducteurs, pour la détection de la position du support de données (2,3) l'unité de lecture (1) comporte sur l'une ou l'autre piste d'accès (A,B) un circuit pour déterminer la profondeur de modulation (T1, T2) des signaux reçus avec les deux parties d'antenne (A1, A2) et des signaux de sortie de phase opposée pouvant être envoyés pour augmenter la portée de lecture avec l'unité de lecture (1) lors de l'orientation inverse des deux parties d'antenne (A1, A2) ou des signaux de sortie de même phase lors de l'orientation de même sens des deux parties d'antenne (A1, A2).

2. Dispositif selon la revendication 1, **caractérisé en ce que** l'unité de lecture (1) comporte un microprocesseur pour déterminer les différentes profondeurs de modulation (T1, T2) des signaux reçus avec les deux parties d'antenne (A1, A2).

3. Dispositif selon la revendication 1 ou 2, **caractérisé en ce que** les signaux reçus par les deux parties d'antenne (A1, A2) peuvent être acheminés au microprocesseur de l'unité de lecture (1) respectivement par un filtre d'entrée (17, 18) avec amplificateur.

4. Dispositif selon l'une quelconque des revendications précédentes, **caractérisé en ce que** l'unité de lecture (1) comporte un système électronique d'émission / réception (12, 13).

5. Dispositif selon la revendication 1, **caractérisé en ce que** les deux parties d'antenne (A1, A2) peuvent être activées en alternance dans un fonctionnement en multiplexage temporel.

6. Dispositif selon l'une quelconque des revendications précédentes, **caractérisé en ce que** les supports de données (2,3) sont constitués en tant que supports de données anticollision.

7. Dispositif selon la revendication 1, **caractérisé en ce que** l'unité de lecture (1) comporte un pilote d'antenne (14, 15) pour chaque partie d'antenne (A1, A2) et un des deux pilotes d'antenne (14, 15) est constitué comme pilote d'antenne inversé (15) pour générer des signaux de sortie de phase opposée.

8. Dispositif selon la revendication 7, **caractérisé en ce que** l'unité de lecture (1) comporte un circuit avec lequel les deux parties d'antenne (A1, A2) peuvent être pilotées en alternance par les deux pilotes d'antenne (14, 15).
